(19) Europäisches Patentamt

European Patent Office

Office européen des brevets

(11) **EP 4 103 469 B1**

(12) **FASCICULE DE BREVET EUROPEEN**

(45) Date de publication et mention de la délivrance du brevet:
**27.03.2024 Bulletin 2024/13**

(21) Numéro de dépôt: **21703487.5**

(22) Date de dépôt: **11.02.2021**

(51) Classification Internationale des Brevets (IPC):
**B64C 25/40** $^{(2006.01)}$    **B64C 25/42** $^{(2006.01)}$
**B60T 8/17** $^{(2006.01)}$

(52) Classification Coopérative des Brevets (CPC):
**B64C 25/405; B60T 8/1703; B64C 25/426;**
**Y02T 50/80**

(86) Numéro de dépôt international:
**PCT/EP2021/053288**

(87) Numéro de publication internationale:
**WO 2021/160719 (19.08.2021 Gazette 2021/33)**

(54) **PROCEDE DE PILOTAGE D'UN SYSTEME DE TAXIAGE D'UN AERONEF**

VERFAHREN ZUR STEUERUNG EINES FLUGZEUGROLLSYSTEMS

METHOD FOR CONTROLLING AN AIRCRAFT TAXI SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.02.2020 FR 2001357**

(43) Date de publication de la demande:
**21.12.2022 Bulletin 2022/51**

(73) Titulaire: **Safran Landing Systems
78140 Vélizy-Villacoublay (FR)**

(72) Inventeurs:
- **LIEGEOIS, Pierre-Yves
  77550 MOISSY-CRAMAYEL (FR)**
- **BOISSARD, Laurent
  77550 MOISSY-CRAMAYEL (FR)**
- **HADJIDJ, Djemouai
  31702 Blagnac Cedex (FR)**

(74) Mandataire: **Cabinet Boettcher
5, rue de Vienne
75008 Paris (FR)**

(56) Documents cités:
**EP-A1- 3 453 613    US-A1- 2015 210 383**

**Description**

L'invention concerne le domaine des systèmes de taxiage d'aéronef.

ARRIERE PLAN DE L'INVENTION

On envisage d'équiper certains aéronefs modernes d'un système de taxiage qui permet de déplacer l'aéronef au sol de manière autonome, c'est-à-dire sans utiliser les moteurs principaux de l'aéronef.

Le système de taxiage comporte classiquement une pluralité d'actionneurs d'entraînement destinés chacun à entraîner en rotation l'une des roues de l'aéronef.

Le système de taxiage est généralement un système électrique dans lequel chaque actionneur d'entraînement est un actionneur électromécanique qui comporte un moteur électrique.

Lorsque le pilote de l'aéronef décide d'utiliser le système de taxiage pour déplacer l'aéronef au sol, il génère une consigne de traction pour piloter le moteur électrique de chaque actionneur d'entraînement de sorte que ledit actionneur d'entraînement applique sur la roue associée un couple moteur de traction qui permet de déplacer l'aéronef. Le couple moteur de traction est fourni au démarrage et tout au long de la mission du système de taxiage.

Cependant, lorsque le système de taxiage est utilisé pour déplacer l'aéronef au sol et que le pilote décide de freiner l'aéronef, l'énergie cinétique de l'aéronef est telle que les actionneurs d'entraînement et leur système d'alimentation électrique ne peuvent pas être utilisés pour assurer la fonction de freinage.

En effet, les puissances instantanées sont trop élevées pour assurer une décélération de l'aéronef compatible avec la distance de ralentissement ou d'arrêt requise. De telles puissances instantanées entraîneraient des densités de courant rédhibitoires.

Par ailleurs, l'énergie cinétique de l'aéronef est très élevée et nécessiterait soit d'utiliser une capacité de stockage d'énergie électrique gigantesque, soit de mettre en oeuvre des moyens pour « brûler » cette énergie électrique surdimensionnée.

Ainsi, lorsque le système de taxiage est utilisé pour déplacer l'aéronef au sol en marche avant, le freinage de l'aéronef n'est pas réalisé par les actionneurs d'entraînement mais par les freins à friction qui équipent généralement les roues freinées de l'avion.

Le document EP 3 453 613 A1 divulgue un système comprenant un contrôleur agencé pour répartir un effort de freinage entre un frein à friction et un actionneur d'entraînement.

OBJET DE L'INVENTION

L'invention a pour objet d'améliorer la robustesse mécanique et la fiabilité d'un système de taxiage d'un aéronef.

RESUME DE L'INVENTION

En vue de la réalisation de ce but, on propose un procédé de pilotage d'un système de taxiage d'un aéronef, ledit système de taxiage comportant au moins un actionneur d'entraînement agencé pour entraîner en rotation une roue de l'aéronef, ladite roue étant en outre équipée d'un frein distinct de l'actionneur d'entraînement, le procédé de pilotage comprenant les étapes de :

-    générer une commande de traction pour piloter un moteur électrique de l'actionneur d'entraînement de sorte que l'actionneur d'entraînement applique sur la roue un couple moteur de traction destiné à déplacer l'aéronef au sol ;
-    détecter si une commande de freinage externe, destinée à commander un freinage de la roue via le frein, est ou non générée ;
-    si une commande de freinage externe est générée, produire une commande minimum prédéterminée pour piloter le moteur électrique de sorte que l'actionneur d'entraînement applique sur la roue au cours du freinage un couple moteur minimum prédéterminé qui est strictement positif ;
-    détecter si une vitesse de l'aéronef devient nulle et, si c'est le cas, inhiber la commande minimum prédéterminée de sorte que l'actionneur d'entraînement applique sur la roue un couple nul.

Ainsi, lorsque la commande de freinage externe est détectée et que la roue est freinée par le frein (et non par l'actionneur d'entraînement lui-même), le moteur électrique de l'actionneur d'entraînement n'est pas désactivé mais est piloté de sorte que l'actionneur d'entraînement applique sur la roue un couple moteur minimum prédéterminé.

La désactivation du moteur électrique aurait pour résultat de laisser libres les éléments mécaniques de l'actionneur d'entraînement au cours du freinage, ce qui générerait au cours du freinage du bruit et des vibrations qui tendraient à dégrader mécaniquement le moteur électrique et l'actionneur d'entraînement.

Au contraire, lorsque le procédé de pilotage selon l'invention est utilisé, le couple moteur minimum prédéterminé permet d'assurer le contact entre les dents solidaires en rotation du rotor du moteur électrique et celles solidaires de la roue. Le maintien de ce contact au cours du freinage permet de réduire fortement le bruit et les vibrations qui ont été évoqués, et donc d'améliorer la robustesse mécanique et la fiabilité du système de taxiage.

De manière particulière, le couple moteur minimum prédéterminé est défini de manière à assurer qu'au cours du freinage, la commande minimum prédéterminée ne puisse pas produire un courant d'axe quadratique négatif.

De manière particulière, la commande minimum prédéterminée est définie de sorte qu'un courant d'axe quadratique minimum Iqmin soit tel que :

$$\text{Iqmin} > \text{Idmax.sin}(\theta_m),$$

où Idmax est un courant de défluxage maximum susceptible d'être appliqué et où $\theta_m$ est une erreur de mesure angulaire maximum d'un capteur de position angulaire du rotor du moteur électrique, ledit capteur de position angulaire étant utilisé pour piloter le moteur électrique.

De manière particulière, le couple moteur minimum prédéterminé est compris entre 400N.m et 600N.m.

De manière particulière, la commande de freinage externe est générée par un pilote de l'aéronef à l'aide d'une pédale de frein, et la détection de la génération de la commande de freinage externe comprend les étapes d'acquérir une estimation d'un appui sur la pédale de frein et de comparer l'estimation de l'appui avec au moins un seuil prédéterminé.

L'invention concerne également un système de pilotage agencé pour mettre en oeuvre un tel procédé de pilotage, le système de pilotage comportant :

- un module de contrôle commande agencé pour générer la commande de traction ;
- un module de détection de freinage agencé pour détecter si la commande de freinage externe est ou non générée ;
- un module d'application agencé pour générer la commande minimum prédéterminée ;
- un module de détection de vitesse nulle agencé pour détecter si la vitesse de l'aéronef devient nulle ;
- un module d'inhibition agencé pour inhiber la commande minimum prédéterminée lorsque la vitesse de l'aéronef devient nulle.

De manière particulière, le module de détection de freinage comporte un comparateur à hystérésis comprenant une première entrée sur laquelle est appliquée une estimation d'un appui sur une pédale de frein, une deuxième entrée sur laquelle est appliqué un seuil prédéterminé haut et une troisième entrée sur laquelle est appliqué un seuil prédéterminé bas, le comparateur à hystérésis étant agencé pour réaliser une comparaison de l'estimation de l'appui avec le seuil prédéterminé haut et le seuil prédéterminé bas.

De manière particulière, le module d'application comporte un premier commutateur deux voies ayant une première entrée sur laquelle est appliquée la commande minimum prédéterminé, une deuxième entrée sur laquelle est appliquée la commande de traction, une sortie, et une entrée de commande sur laquelle est appliqué un signal de détection de freinage représentatif d'un résultat de la détection du freinage.

De manière particulière, le module d'inhibition comporte un deuxième commutateur deux voies ayant une première entrée sur laquelle est appliquée une commande de couple nul, une deuxième entrée sur laquelle est appliquée la sortie du premier commutateur deux voies, et une entrée de commande sur laquelle est appliqué un signal de détection de vitesse nulle représentatif d'un résultat de la détection de vitesse nulle de l'aéronef.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

- la figure 1 représente un système de pilotage d'un système de taxiage d'un avion ;
- la figure 2 représente un graphique montrant, dans un repère de Park, un point de fonctionnement d'un moteur électrique d'un actionneur d'entraînement alors que le couple généré est un couple moteur de traction ;
- la figure 3 représente un graphique analogue à celui de la figure 2, comprenant un axe quadratique et un axe direct réels, ainsi qu'un axe quadratique et un axe direct théoriques ;
- la figure 4 représente un graphique analogue à celui de la figure 2, lors d'un freinage à haute vitesse ;
- la figure 5 représente un graphique analogue à celui de la figure 4, comprenant un axe quadratique et un axe direct réels, ainsi qu'un axe quadratique et un axe direct théoriques ;
- la figure 6 représente un graphique comprenant une courbe d'une caractéristique couple/vitesse du moteur électrique.

DESCRIPTION DETAILLEE DE L'INVENTION

L'invention est ici mise en oeuvre dans un avion qui comporte une pluralité d'atterrisseurs au bas desquels sont montées des roues. L'avion comporte aussi un système de freinage qui permet de freiner l'avion au sol, et un système de taxiage qui permet de déplacer l'avion au sol sans utiliser les moteurs principaux de l'avion. Le système de freinage est ici un système à actionnement hydraulique mais pourrait parfaitement être un système différent, par exemple à actionnement électrique ou électrohydraulique. Le système de taxiage est ici un système à actionnement électrique.

Certaines des roues de l'avion sont équipées à la fois d'un frein, qui appartient au système de freinage, et d'un actionneur d'entraînement, qui appartient au système de taxiage.

Le frein de chacune de ces roues comprend une couronne portant une pluralité d'actionneurs de freinage. Un tube de torsion est fixé à la couronne. Le tube de torsion s'étend dans la jante de la roue. Le frein à friction comprend aussi une pile de disques composée de rotors qui sont solidaires en rotation de la jante de la roue et de stators qui sont solidaires en rotation du tube de torsion. Les actionneurs de freinage sont agencés pour exercer sélectivement, lors de l'admission de fluide sous pression, un effort de presse sur les disques, générant ainsi un couple de freinage.

Le système de freinage comprend aussi une pédale de frein gauche qui permet au pilote de commander les freins des roues situées du côté gauche de l'avion, et une pédale de frein droite qui permet au pilote de commander les freins des roues situées du côté droit de l'avion.

Le système de taxiage comprend donc les actionneurs d'entraînement. Chaque actionneur d'entraînement d'une roue est utilisé pour entraîner en rotation ladite roue. Chaque actionneur d'entraînement est un actionneur électromécanique qui comprend un moteur électrique comportant un stator et un rotor.

L'actionneur d'entraînement comprend un train d'engrenages. Le train d'engrenages comporte une première roue dentée solidaire en rotation du rotor du moteur électrique et comprenant des premières dents, et une deuxième roue dentée solidaire en rotation de la roue et comprenant des deuxièmes dents. Le train d'engrenages comporte aussi possiblement une ou plusieurs autres roues dentées situées entre la première roue dentée et la deuxième roue dentée, ou bien un dispositif d'embrayage, ou bien encore un autre élément de liaison mécanique.

Lorsque l'actionneur d'entraînement se trouve dans une position dite « d'engrènement », la première roue dentée engrène la deuxième roue dentée permettant ainsi à l'actionneur d'entraînement d'exercer un couple moteur de traction pour entraîner la roue en rotation et ainsi déplacer l'avion au sol.

Outre les actionneurs d'entraînement, le système de taxiage comporte un système de pilotage dudit système de taxiage, qui fonctionne de la manière suivante.

Lorsque le pilote génère une consigne de traction pour déplacer l'avion au sol grâce au système de taxiage, le système de pilotage génère une commande de traction pour piloter le moteur électrique de l'actionneur d'entraînement de chaque roue, de sorte que ledit actionneur d'entraînement applique sur ladite roue un couple moteur de traction destiné à déplacer l'avion au sol.

Le système de pilotage détecte alors si une commande de freinage externe, destinée à commander un freinage de la roue, est ou non générée.

La commande de freinage externe est ici produite par le pilote via une action sur une pédale de frein. On note que la commande de freinage externe pourrait aussi être générée de manière différente, par exemple par un système de pilotage automatique.

La commande de freinage externe vise à freiner l'avion au sol en agissant sur les freins du système de freinage (et non sur les actionneurs d'entraînement). Le frein d'une roue est distinct de l'actionneur d'entraînement de ladite roue, c'est-à-dire qu'il s'agit de deux équipements différents et non intégrés l'un dans l'autre.

Si une commande de freinage externe est générée, le système de pilotage produit une commande minimum prédéterminée pour piloter le moteur électrique de sorte que l'actionneur d'entraînement applique sur la roue un couple moteur minimum prédéterminé. Le couple moteur minimum prédéterminé est strictement positif.

Ainsi, lorsque le pilote commande un freinage de l'avion, qui est donc réalisé pour chaque roue non pas par l'actionneur d'entraînement mais par le frein de la roue, l'actionneur d'entraînement de chaque roue produit malgré tout dans le même sens un couple moteur non nul mais égal au couple moteur minimum prédéterminé. Le couple moteur minimum prédéterminé permet d'assurer au cours du freinage un contact entre les premières dents solidaires en rotation du rotor du moteur électrique et les deuxièmes dents solidaires de la roue.

Le système de pilotage détecte alors si une vitesse de l'avion devient nulle et, si c'est le cas, le système de pilotage inhibe la commande minimum prédéterminée de sorte que l'actionneur d'entraînement applique sur la roue un couple nul.

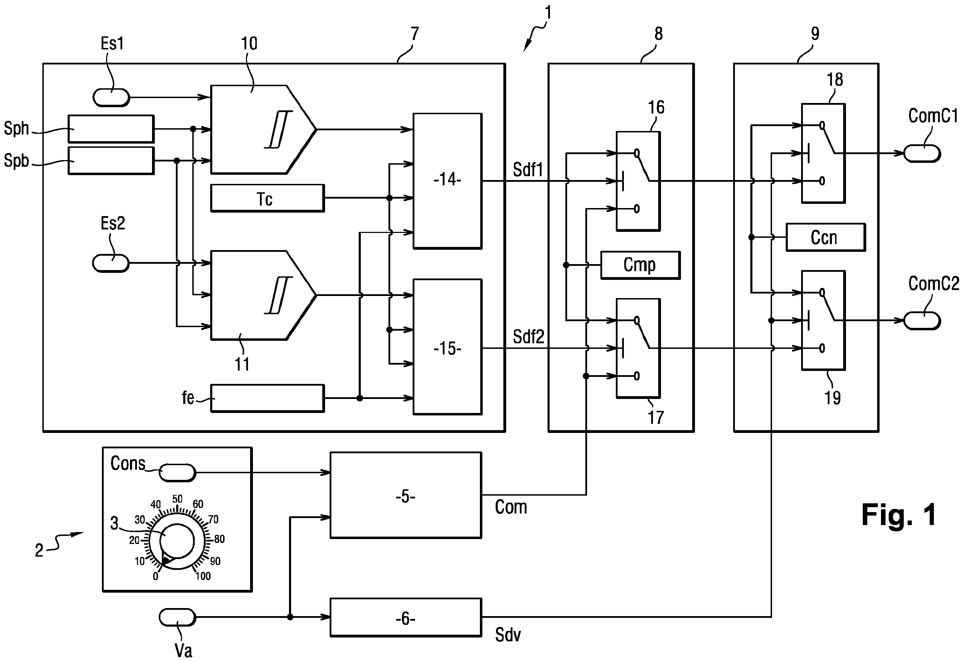

Pour cela, en référence à la figure 1, le système de pilotage 1 comprend tout d'abord une interface de commande 2 intégrée dans le cockpit et qui permet au pilote de commander le système de taxiage. L'interface de commande 2 comprend un bouton rotatif 3 et une graduation en pourcentages (de 0 à 100%) pour produire une consigne de traction Cons.

Le système de pilotage 1 comprend aussi un module de contrôle commande 5, un module de détection de vitesse nulle 6, un module de détection de freinage 7, un module d'application 8 et un module d'inhibition 9.

On note ici que ces modules peuvent être réalisés par des moyens matériels *(hardware)* et/ou logiciels *(software),* et être intégrés dans un ou plusieurs équipements (calculateur, contrôleur, concentrateur de données, etc.).

Le module de contrôle commande 5 acquiert la consigne de traction Cons et une estimation de la vitesse de l'avion Va, met en oeuvre des lois de contrôle commande, et génère une commande de traction Com.

Le module de détection de vitesse nulle 6 acquiert l'estimation de la vitesse de l'avion Va, détecte si l'estimation de la vitesse de l'avion Va est nulle ou non, et produit un signal de détection de vitesse nulle Sdv représentatif du résultat de cette détection.

Le module de détection de freinage 7 comprend un premier comparateur à hystérésis 10 et un deuxième comparateur à hystérésis 11.

Le premier comparateur à hystérésis 10 comprend une première entrée sur laquelle est appliquée une estimation d'un appui Es1 du pilote sur la pédale de frein gauche (en pourcentage), une deuxième entrée sur laquelle est appliqué un seuil prédéterminé haut Sph (en pourcentage) et une troisième entrée sur laquelle est appliqué un seuil prédéterminé bas Spb (en pourcentage).

De même, le deuxième comparateur à hystérésis 11 comprend une première entrée sur laquelle est appliquée une estimation d'un appui Es2 du pilote sur la pédale de frein droite (en pourcentage), une deuxième entrée sur laquelle est appliqué le seuil prédéterminé haut Sph et une troisième entrée sur laquelle est appliqué le seuil prédéterminé bas Spb.

Le module de détection de freinage 7 comprend aussi un premier bloc confirmateur 14 et un deuxième bloc confirmateur 15.

Le premier bloc confirmateur 14 comprend une première entrée reliée à la sortie du premier comparateur à hystérésis 10, une deuxième entrée et une troisième entrée sur lesquelles est appliqué un temps de confirmation Tc, et une quatrième entrée sur laquelle est appliquée une fréquence d'échantillonnage fe.

De même, le deuxième bloc confirmateur 15 comprend une première entrée reliée à la sortie du deuxième comparateur à hystérésis 11, une deuxième entrée et une troisième entrée sur lesquelles est appliqué le temps de confirmation Tc, et une quatrième entrée sur laquelle est appliquée la fréquence d'échantillonnage fe.

Le module d'application 8 comprend un premier commutateur deux voies 16 ayant une première entrée sur laquelle est appliquée une commande minimum prédéterminée Cmp, une deuxième entrée reliée à la sortie du module de contrôle commande 5, et une entrée de commande reliée à la sortie du premier bloc confirmateur 14.

Le module d'application 8 comprend de plus un premier commutateur deux voies 17 ayant une première entrée sur laquelle est appliquée la commande minimum prédéterminée Cmp, une deuxième entrée reliée à la sortie du module de contrôle commande 5, et une entrée de commande reliée à la sortie du deuxième bloc confirmateur 15.

Le module d'inhibition 9 comprend un deuxième commutateur deux voies 18 ayant une première entrée sur laquelle est appliquée une commande de couple nul Ccn (égale à 0 N.m), une deuxième entrée reliée à la sortie du premier commutateur deux voies 16 du module d'application 8, et une entrée de commande reliée à la sortie du module de détection de vitesse nulle 6.

Le module d'inhibition 9 comprend de plus un deuxième commutateur deux voies 19 ayant une première entrée sur laquelle est appliquée la commande de couple nul Ccn (égale à 0 N.m), une deuxième entrée reliée à la sortie du premier commutateur deux voies 17 du module d'application 8, et une entrée de commande reliée à la sortie du module de détection de vitesse nulle 6.

On décrit maintenant plus en détail le fonctionnement du système de pilotage 1.

Lorsque le pilote génère une consigne de traction Cons en utilisant l'interface de commande 2 pour déplacer l'avion au sol, le module de contrôle commande 5 génère une commande de traction Com qui permet de déplacer l'avion au sol.

Comme on l'a vu précédemment, c'est le système de freinage qui est utilisé pour freiner l'avion.

Le système de pilotage 1 permet d'appliquer sur chaque roue un couple moteur minimum prédéterminé lorsque la vitesse de l'avion est non nulle et qu'un freinage est commandé.

Le module de détection de freinage 7 permet de détecter si une commande de freinage est ou non générée.

Pour cela, le premier comparateur à hystérésis 10 compare l'estimation de l'appui Es1 du pilote sur la pédale de frein gauche avec le seuil prédéterminé haut Sph et le seuil prédéterminé bas Spb. L'hystérésis permet d'éviter des changements d'état intempestifs du statut de la phase de freinage.

De même, le deuxième comparateur à hystérésis 11 compare l'estimation de l'appui Es2 du pilote sur la pédale de frein droite avec le seuil prédéterminé haut Sph et le seuil prédéterminé bas Spb.

Le premier bloc confirmateur 14 permet de confirmer la détection du freinage à gauche lorsque qu'un statut (freinage détecté ou freinage non détecté) est maintenu pendant une durée supérieure ou égale au temps de confirmation Tc. Le premier bloc confirmateur 14 produit sur sa sortie un signal de détection de freinage Sdfl représentatif d'un résultat de la détection du freinage sur le côté gauche de l'avion.

De même, le deuxième bloc confirmateur 15 permet de confirmer la détection du freinage à droite lorsque qu'un statut (freinage détecté ou freinage non détecté) est maintenu pendant une durée supérieure ou égale au temps de confirmation Tc. Le deuxième bloc confirmateur 15 produit sur sa sortie un signal de détection de freinage Sdf2 représentatif d'un résultat de la détection du freinage sur le côté droit de l'avion.

Si le premier bloc confirmateur 14 produit un signal de détection de freinage Sdfl actif, signifiant ainsi qu'une commande de freinage externe a été générée via la pédale de frein gauche, la première entrée du premier commutateur deux voies 16 du module d'application 8 est reliée à la sortie dudit premier commutateur deux voies 16, et donc la commande minimum prédéterminée Cmp est appliquée sur la sortie dudit premier commutateur deux voies 16.

Par contre, si le premier bloc confirmateur 14 produit un signal de détection de freinage Sdfl inactif, la deuxième entrée du premier commutateur deux voies 16 du module d'application 8 est reliée à la sortie dudit premier commutateur deux voies 16, et donc la commande de traction Com est appliquée sur la sortie dudit premier commutateur deux voies 16.

De même, si le deuxième bloc confirmateur 15 produit un signal de détection de freinage Sdf2 actif, signifiant ainsi qu'une commande de freinage externe a été générée via la pédale de frein droite, la première entrée du premier commutateur deux voies 17 du module d'application 8 est reliée à la sortie dudit premier commutateur deux voies 17, et donc la commande minimum prédéterminée Cmp est appliquée sur la sortie dudit premier commutateur deux voies 17.

Par contre, si le deuxième bloc confirmateur 15 produit un signal de détection de freinage Sdf 2 inactif, la deuxième entrée du premier commutateur deux voies 17 du module d'application 8 est reliée à la sortie dudit premier commutateur deux voies 17, et donc la commande de traction Com est appliquée sur la sortie dudit premier commutateur deux voies 17.

Le module d'application 8 génère ainsi la commande minimum prédéterminée Cmp.

Si le module de détection de vitesse nulle 6 produit un signal de détection de vitesse nulle Sdv inactif, représentatif de la détection d'une vitesse non nulle de l'avion, la deuxième entrée du deuxième commutateur deux voies 18 du module d'inhibition 9 est reliée à la sortie dudit deuxième commutateur deux voies 18. De même, la deuxième entrée du deuxième commutateur deux voies 19 du module d'inhibition 9 est reliée à la sortie dudit deuxième commutateur deux voies 19.

Par conséquent, si la vitesse de l'avion n'est pas nulle et qu'un freinage est détecté pour le côté gauche (c'est à dire si le module de détection de freinage 7 détecte qu'une commande externe de freinage est générée pour le côté gauche), le système de pilotage 1 produit une commande de couple ComC1 pour les actionneurs d'entraînement des roues du côté gauche, qui est égale à la commande minimum prédéterminée Cmp. Chaque actionneur d'entraînement du côté gauche applique sur la roue associée le couple moteur minimum prédéterminé. De même, si la vitesse de l'avion n'est pas nulle et qu'un freinage est détecté pour le côté droit (c'est à dire si le module de détection de freinage 7 détecte qu'une commande externe de freinage est générée pour le côté droit), le système de pilotage 1 produit une commande de couple ComC2 pour les actionneurs d'entraînement des roues du côté droit, qui est égale à la commande minimum prédéterminée Cmp. Chaque actionneur d'entraînement du côté droit applique sur la roue associée le couple moteur minimum prédéterminé.

Par contre, si la vitesse de l'avion n'est pas nulle et qu'un freinage n'est pas détecté (ni pour le côté gauche ni pour le côté droit), le système de pilotage 1 génère une commande de couple ComC1 égale à la commande de traction Com produite à partir de la consigne de traction Cons générée par le pilote. Chaque actionneur d'entraînement du côté gauche applique sur la roue associée un couple moteur de traction destiné à déplacer l'avion au sol. De même, le système de pilotage 1 génère une commande de couple ComC2 égale à la commande de traction Com produite à partir de la consigne de traction Cons générée par le pilote. Chaque actionneur d'entraînement du côté droit applique sur la roue associée un couple moteur de traction destiné à déplacer l'avion au sol.

Si le module de détection de vitesse nulle 6 produit un signal de détection de vitesse nulle Sdv actif, représentatif de la détection d'une vitesse nulle de l'avion, la première entrée du deuxième commutateur deux voies 18 du module d'inhibition 9 est reliée à la sortie dudit deuxième commutateur deux voies 18, et donc le système de pilotage 1 inhibe la commande minimum prédéterminée en générant une commande de couple ComC1 nulle (égale à la commande de couple nul Ccn) pour piloter chaque actionneur d'entraînement des roues du côté gauche. L'actionneur d'entraînement de chaque roue du côté gauche applique sur ladite roue un couple nul. De même, la première entrée du deuxième commutateur deux voies 19 du module d'inhibition 9 est reliée à la sortie dudit deuxième commutateur deux voies 19, et donc le système de pilotage 1 inhibe la commande minimum prédéterminée en générant une commande de couple ComC2 nulle (égale à la commande de couple nul Ccn) pour piloter chaque actionneur d'entraînement des roues du côté droit. L'actionneur d'entraînement de chaque roue du côté droit applique sur ladite roue un couple nul.

On décrit maintenant la manière dont est défini le couple moteur minimum prédéterminé (qui est strictement positif).

Le moteur électrique de chaque actionneur d'entraînement est ici un moteur synchrone à aimants, piloté par un onduleur qui alimente les phases du moteur pour que le couple généré par l'actionneur d'entraînement corresponde à la commande de couple.

On utilise la transformée de Park pour modéliser l'alimentation du moteur électrique. Le moteur électrique est alimenté selon l'axe quadratique et selon l'axe direct. L'axe direct correspond à l'axe de magnétisation des aimants du moteur électrique.

L'alimentation selon l'axe quadratique permet de produire du couple. L'alimentation selon l'axe direct permet de défluxer le moteur électrique pour limiter le flux des aimants, ce qui permet d'abaisser la force électromotrice du moteur électrique et donc d'optimiser le calibre en courant de l'onduleur. Le moteur électrique utilisé ici est fortement défluxé à haute vitesse.

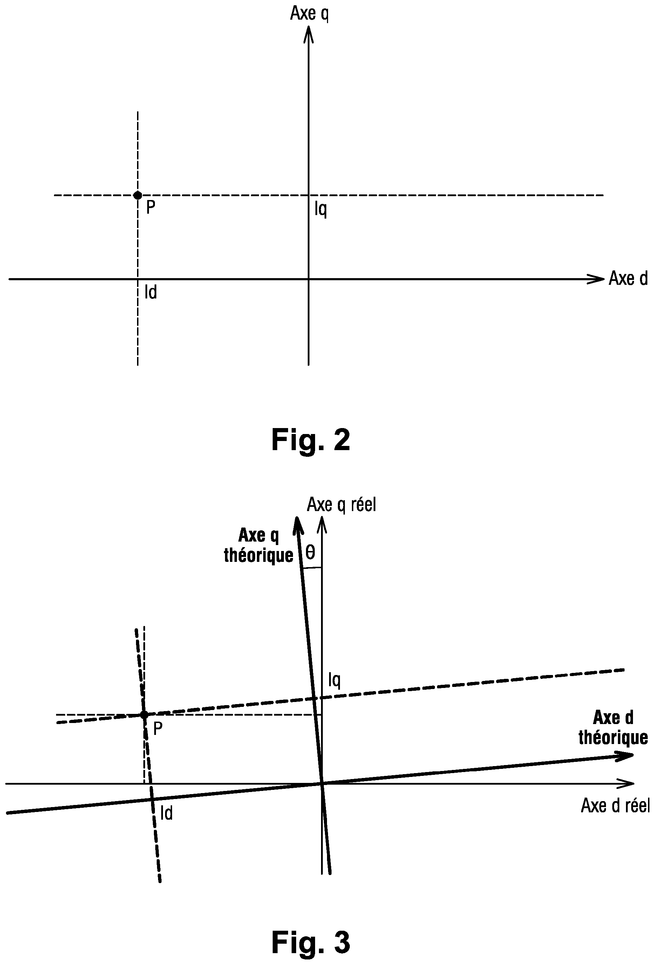

Sur la figure 2, on représente le point de fonctionnement P du moteur électrique alors que le couple à générer est un couple moteur de traction destiné à déplacer l'avion lorsque celui-ci est au sol, et que la vitesse est élevée.

Le courant d'axe quadratique Iq (Axe q) permet de produire la commande de couple. Le courant d'axe quadratique Iq est un courant positif car le couple moteur de traction est un couple positif.

Le courant d'axe direct Id (Axe d), qui est le courant de défluxage à haute vitesse, est un courant négatif.

On voit que la valeur absolue du courant d'axe direct Id est environ égale au double de la valeur absolue du courant d'axe quadratique Iq.

La connaissance de l'axe quadratique et de l'axe direct est obtenue par la mesure de la position angulaire du rotor du moteur électrique par rapport aux phases du stator (qui sont fixes dans l'espace) . La mesure de la position angulaire du rotor est fournie par un capteur de position angulaire, qui est ici un résolveur, dont les mesures de position angulaire permettent de piloter le moteur électrique.

Or, les mesures de position angulaire produites par le résolveur incluent une erreur de mesure angulaire θ non nulle (appelée aussi erreur d'indexation).

On voit sur la figure 3 que l'axe quadratique réel (Axe q réel) et l'axe direct réel (Axe d réel) sont orientés par rapport à l'axe quadratique théorique (Axe q théorique) et à l'axe direct théorique (Axe d théorique) d'un angle égal à l'erreur de mesure angulaire.

Les valeurs de Iq et de Id sont alors modifiées, et on a :

$$Idréel = Idthéorique.\cos \theta - Iqthéorique.\sin \theta$$

$$Iqréel = Idthéorique.\sin \theta + Iqthéorique.\cos \theta$$

les Iq étant positifs et les Id étant négatifs.

La valeur du couple généré est donc modifié d'une valeur égale à :

Idthéorique.sin θ

qui dépend du signe de θ. Comme Id est négatif, le couple généré est plus faible si θ est positif et plus fort si θ est négatif.

La valeur du défluxage est quant à elle modifiée d'une valeur égale à :

-Iqthéorique.sin θ

qui dépend du signe de θ. Cela peut poser des problèmes de stabilité si θ est négatif.

Par ailleurs, on a vu que, lorsque l'avion est déplacé grâce au système de taxiage et que l'avion doit être freiné, ce sont les freins du système de freinage qui sont utilisés. On maintient cependant un couple résiduel, égal au couple moteur minimum prédéterminé, pour maintenir un contact entre les premières dents et les deuxièmes dents dans le train d'engrenages. Le couple moteur minimum prédéterminé doit être suffisamment élevé pour éviter de passer en mode freinage lorsque le pilote freine à haute vitesse (sous fort défluxage).

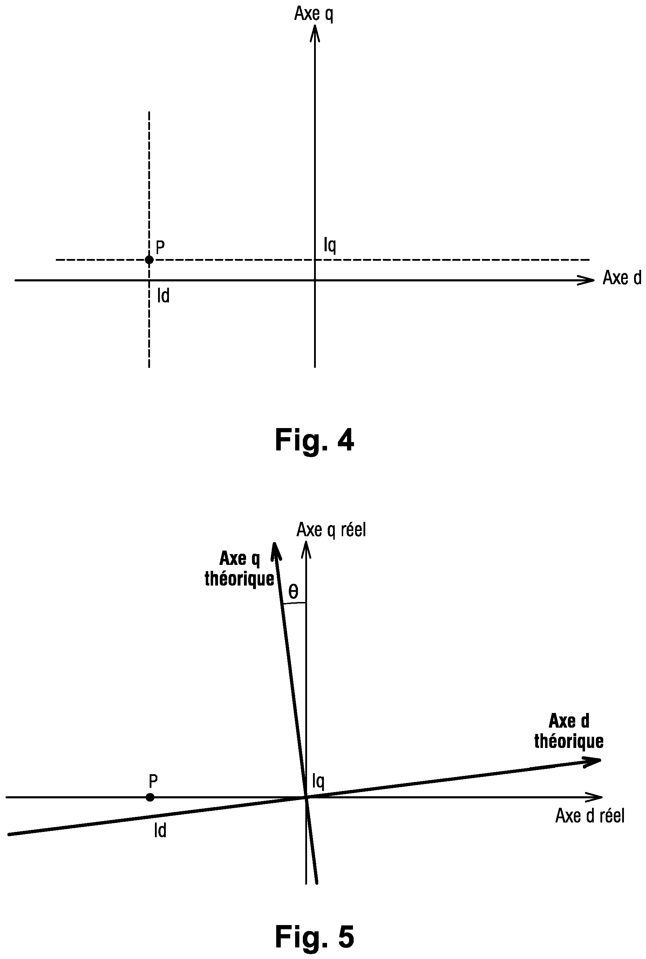

Les figures 4 et 5 illustrent cette situation de l'avion à haute vitesse pendant le freinage.

On voit sur ces figures que le couple appliqué est faible et que, en tenant compte de l'erreur de mesure angulaire, le couple appliqué pourrait devenir négatif, ce qui conduirait à faire passer l'actionneur d'entraînement dans un mode de freinage (le moteur électrique est alors un générateur d'énergie électrique, ce qui pose les problèmes de puissance instantanée et de stockage évoqués plus tôt).

Pour éviter que cette situation ne se produise, il a été envisagé d'améliorer le résolveur pour diminuer l'erreur de mesure angulaire. Il a aussi été envisagé d'ajouter un recalage logiciel de l'installation mécanique du résolveur dans le moteur électrique. Cependant, le risque d'erreur demeure trop élevé car quelques dixièmes de degré suffisent à perturber sensiblement la valeur du couple appliqué dès que le moteur électrique est fortement défluxé, comme c'est le cas ici.

On définit donc le couple moteur prédéterminé de manière à assurer qu'au cours du freinage, la commande minimum prédéterminée ne produise pas un courant d'axe quadratique négatif.

La commande minimum prédéterminée est donc définie de sorte que le courant d'axe quadratique minimum Iqmin soit tel que :

$$Iqmin > Idmax.sin(\Theta m),$$

où Idmax est un courant de défluxage maximum susceptible d'être appliqué et où $\theta_m$ est une erreur de mesure angulaire maximum du résolveur.

Le couple moteur minimum prédéterminé choisi interdit donc un fonctionnement du moteur électrique en génératrice, et donc de récupérer de la puissance.

A l'erreur de mesure angulaire, il faut aussi ajouter les erreurs de mesure de courant (qui augmentent l'incertitude sur le positionnement du point de fonctionnement et donc sur le couple appliqué), les tolérances de fabrication du moteur électrique (qui impliquent plus ou moins de force contrélectromotrice), la température des bobinages et des aimants du moteur électrique, la tension du réseau électrique, qui implique de défluxer plus ou moins, et la pente de la variation de la tension du réseau électrique, qui oblige à ajouter une marge sur le courant de défluxage.

Le couple moteur minimum prédéterminé est donc supérieur à un seuil de couple prédéterminé ce qui permet d'assurer que, quelles que soient les conditions de fonctionnement du système de pilotage, le couple appliqué demeure un couple moteur.

Compte tenu de ces exigences, on utilise un couple moteur minimum prédéterminé compris entre 400N.m et 600N.m, avantageusement égal à 500N.m (équivalent ramené à la roue). On note que, pour un avion de type Airbus A320, la valeur maximale du couple de freinage, produit par le frein d'une roue, peut aller jusqu'à 6700 N.m à la roue (environ) . Ce couple maximum de freinage correspond à la valeur de 2400daN qui elle-même correspond à la *retardation force* interdite par la spécification de certification CS25.1309 au-dessus de V1 lors du décollage.

Le couple moteur minimum prédéterminé est appliqué en permanence, c'est-à-dire à la fois lorsque l'actionneur d'entraînement produit un couple moteur de traction et lorsque l'avion est freiné par le système de freinage.

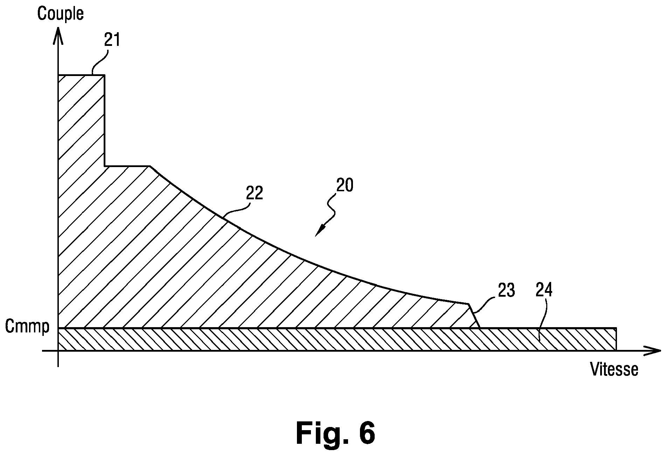

Sur la figure 6, la caractéristique couple/vitesse 20 du moteur électrique de chaque actionneur d'entraînement présente classiquement une zone d'ordonnée constante 21 à très basse vitesse correspondant au couple de décollage, une zone de limitation de puissance 22 et une zone de stabilité à haute vitesse 23. On a modifié cette caractéristique couple/vitesse 20 « classique » pour y intégrer une zone grise « interdite » 24. Le couple généré est toujours supérieur ou égal au couple moteur minimum prédéterminé Cmmp qui est égal à 500N.m et ce, quelle que soit la vitesse de l'aéronef.

Bien entendu, l'invention n'est pas limitée au mode de réalisation décrit mais englobe toute variante entrant dans le champ de l'invention telle que définie par les revendications.

## Revendications

**1.** Procédé de pilotage d'un système de taxiage d'un aéronef, ledit système de taxiage comportant au moins un actionneur d'entraînement agencé pour entraîner en rotation une roue de l'aéronef, ladite roue étant en outre équipée d'un frein distinct de l'actionneur d'entraînement, le procédé de pilotage comprenant les étapes de :

- générer une commande de traction (Com) pour piloter un moteur électrique de l'actionneur d'entraînement de sorte que l'actionneur d'entraînement applique sur la roue un couple moteur de traction destiné à déplacer l'aéronef au sol ;
- détecter si une commande de freinage externe, destinée à commander un freinage de la roue via le frein, est ou non générée ;

le procédé de pilotage étant **caractérisé en ce qu'**il comporte en outre les étapes de :

- si une commande de freinage externe est générée, produire une commande minimum prédéterminée (Cmp) pour piloter le moteur électrique de sorte que l'actionneur d'entraînement applique sur la roue au cours du freinage un couple moteur minimum prédéterminé qui est strictement positif ;
- détecter si une vitesse de l'aéronef devient nulle et, si c'est le cas, inhiber la commande minimum prédéterminée (Cmp) de sorte que l'actionneur d'entraînement applique sur la roue un couple nul.

**2.** Procédé de pilotage selon la revendication 1, dans lequel le couple moteur minimum prédéterminé est défini de manière à assurer qu'au cours du freinage, la commande minimum prédéterminée (Cmp) ne puisse pas produire un courant d'axe quadratique (Iq) négatif.

**3.** Procédé de pilotage selon la revendication 2, dans lequel la commande minimum prédéterminée est définie de sorte qu'un courant d'axe quadratique minimum Iqmin soit tel que :

$$Iqmin > Idmax.sin(\theta_m),$$

où Idmax est un courant de défluxage maximum susceptible d'être appliqué et où $\theta_m$ est une erreur de mesure angulaire maximum d'un capteur de position angulaire du rotor du moteur électrique, ledit capteur de position angulaire étant utilisé pour piloter le moteur électrique.

4. Procédé de pilotage selon l'une des revendications précédentes, dans lequel le couple moteur minimum prédéterminé est compris entre 400N.m et 600N.m.

5. Procédé de pilotage selon l'une des revendications précédentes, dans lequel la commande de freinage externe est générée par un pilote de l'aéronef à l'aide d'une pédale de frein, et dans lequel la détection de la génération de la commande de freinage externe comprend les étapes d'acquérir une estimation d'un appui (Esl, Es2) sur la pédale de frein et de comparer l'estimation de l'appui avec au moins un seuil prédéterminé (Sph, Spb).

6. Système de pilotage d'un système de taxiage d'un aéronef, le système de pilotage (1) étant agencé pour mettre en oeuvre le procédé de pilotage selon l'une des revendications précédentes, le système de pilotage comportant :

   - un module de contrôle commande (5) agencé pour générer la commande de traction (Com) ;
   - un module de détection de freinage (7) agencé pour détecter si la commande de freinage externe est ou non générée ;
   - un module d'application (8) agencé pour générer la commande minimum prédéterminée ;
   - un module de détection de vitesse nulle (6) agencé pour détecter si la vitesse de l'aéronef devient nulle ;
   - un module d'inhibition (9) agencé pour inhiber la commande minimum prédéterminée lorsque la vitesse de l'aéronef devient nulle.

7. Système de pilotage selon la revendication 6, dans lequel le module de détection de freinage (7) comporte un comparateur à hystérésis (10, 11) comprenant une première entrée sur laquelle est appliquée une estimation d'un appui (Esl, Es2) sur une pédale de frein, une deuxième entrée sur laquelle est appliqué un seuil prédéterminé haut et une troisième entrée sur laquelle est appliqué un seuil prédéterminé bas, le comparateur à hystérésis étant agencé pour réaliser une comparaison de l'estimation de l'appui avec le seuil prédéterminé haut et le seuil prédéterminé bas.

8. Système de pilotage selon l'une des revendications 6 ou 7, dans lequel le module d'application (8) comporte un premier commutateur deux voies (16, 17) ayant une première entrée sur laquelle est appliquée la commande minimum prédéterminé (Cmp), une deuxième entrée sur laquelle est appliquée la commande de traction (Com), une sortie, et une entrée de commande sur laquelle est appliqué un signal de détection de freinage (Sdfl, Sdf2) représentatif d'un résultat de la détection du freinage.

9. Système de pilotage selon la revendication 8, dans lequel le module d'inhibition (9) comporte un deuxième commutateur deux voies (18, 19) ayant une première entrée sur laquelle est appliquée une commande de couple nul (Ccn), une deuxième entrée sur laquelle est appliquée la sortie du premier commutateur deux voies (16, 17), et une entrée de commande sur laquelle est appliqué un signal de détection de vitesse nulle (Sdv) représentatif d'un résultat de la détection de vitesse nulle de l'aéronef.


**Patentansprüche**

1. Verfahren zur Steuerung eines Rollsystems eines Luftfahrzeugs, wobei das genannte Rollsystem mindestens einen Antriebsaktor umfasst, der ausgebildet ist, ein Rad des Luftfahrzeugs in Drehung anzutreiben, wobei das genannte Rad ferner mit einer von dem Antriebsaktor getrennten Bremse ausgestattet ist, wobei das Verfahren zur Steuerung die Schritte umfasst:

   - Generieren eines Zugbefehls (Com), um einen Elektromotor des Antriebsaktors derart zu steuern, dass der Antriebsaktor auf das Rad ein Zugmotordrehmoment aufbringt, das dazu bestimmt ist, das Luftfahrzeug am Boden zu bewegen;
   - Detektieren, ob ein externer Bremsbefehl, der dazu bestimmt ist, ein Bremsen des Rades über die Bremse zu steuern, generiert wird oder nicht;

wobei das Verfahren zur Steuerung **dadurch gekennzeichnet ist, dass** es ferner die Schritte umfasst:

- wenn ein externer Bremsbefehl generiert wird, Erzeugen eines vorbestimmten Mindestbefehls (Cmp), um den Elektromotor derart zu steuern, dass der Antriebsaktor auf das Rad während des Bremsens ein vorbestimmtes Mindestmotordrehmoment aufbringt, das streng positiv ist;
- Detektieren, ob eine Geschwindigkeit des Luftfahrzeugs Null wird, und wenn dies der Fall ist, Verhindern des vorbestimmten Mindestbefehls (Cmp) derart, dass der Antriebsaktor auf das Rad ein Null-Drehmoment aufbringt.

2. Verfahren zur Steuerung nach Anspruch 1, bei dem das vorbestimmte Mindestmotordrehmoment definiert ist, um sicherzustellen, dass während des Bremsens der vorbestimmte Mindestbefehl (Cmp) keinen negativen quadratischen Achsenstrom (Iq) erzeugen kann.

3. Verfahren zur Steuerung nach Anspruch 2, bei dem der vorbestimmte Mindestbefehl derart definiert ist, dass ein minimaler quadratischer Achsenstrom Iqmin derart ist, dass:

$$\text{Iqmin} > \text{Idmax}.\sin(\theta_m),$$

wobei Idmax ein maximaler De-Fluxing-Strom ist, der aufgebracht werden kann, und wobei $\theta_m$ ein maximaler Winkelmessfehler eines Winkelpositionssensors des Rotors des Elektromotors ist, wobei der genannte Winkelpositionssensor verwendet wird, um den Elektromotor zu steuern.

4. Verfahren zur Steuerung nach einem der vorhergehenden Ansprüche, bei dem das vorbestimmte Mindestmotordrehmoment zwischen 400N.m und 600N.m liegt.

5. Verfahren zur Steuerung nach einem der vorhergehenden Ansprüche, bei dem der externe Bremsbefehl von einem Piloten des Luftfahrzeugs mit Hilfe eines Bremspedals erzeugt wird, und bei dem die Detektion der Erzeugung des externen Bremsbefehls die Schritte des Erfassens einer Schätzung eines Betätigens (Esl, Es2) des Bremspedals und des Vergleichens der Schätzung des Betätigens mit mindestens einem vorbestimmten Schwellenwert (Sph, Spb) umfasst.

6. System zur Steuerung eines Rollsystems eines Luftfahrzeugs, wobei das System (1) zur Steuerung ausgebildet ist, das Verfahren zur Steuerung nach einem der vorhergehenden Ansprüche durchzuführen, wobei das System zur Steuerung umfasst:

- ein Befehlssteuermodul (5), das ausgebildet ist, den Zugbefehl (Com) zu generieren;
- ein Bremsdetektionsmodul (7), das ausgebildet ist, zu detektieren, ob der externe Bremsbefehl generiert wird oder nicht;
- ein Anwendungsmodul (8), das ausgebildet ist, den vorbestimmten Mindestbefehl zu generieren;
- ein Null-Geschwindigkeits-Detektionsmodul (6), das ausgebildet ist, zu detektieren, ob die Geschwindigkeit des Luftfahrzeugs Null wird;
- ein Hemmmodul (9), das ausgebildet ist, den vorbestimmten Mindestbefehl zu hemmen, wenn die Geschwindigkeit des Luftfahrzeugs Null wird.

7. System zur Steuerung nach Anspruch 6, bei dem das Bremsdetektionsmodul (7) einen Komparator (10, 11) mit Hysterese umfasst, der einen ersten Eingang umfasst, an dem eine Schätzung eines Betätigens (Esl, Es2) eines Bremspedals angelegt wird, einen zweiten Eingang, an dem ein vorbestimmter oberer Schwellenwert angelegt wird, und einen dritten Eingang, an dem ein vorbestimmter unterer Schwellenwert angelegt wird, wobei der Komparator mit Hysterese ausgebildet ist, einen Vergleich der Schätzung des Betätigens mit dem vorbestimmten oberen Schwellenwert und dem vorbestimmten unteren Schwellenwert durchzuführen.

8. System zur Steuerung nach einem der Ansprüche 6 oder 7, bei dem das Anwendungsmodul (8) einen ersten Zwei-Wege-Schalter (16, 17) umfasst, der einen ersten Eingang hat, an dem der vorbestimmte Mindestbefehl (Cmp) angelegt wird, einen zweiten Eingang, an dem der Zugbefehl (Com) angelegt wird, einen Ausgang und einen Befehlseingang, an dem ein Bremsdetektionssignal (Sdfl, Sdf2) angelegt wird, das repräsentativ für ein Ergebnis der Detektion der Bremsung ist.

9. System zur Steuerung nach Anspruch 8, bei dem das Hemmmodul (9) einen zweiten Zwei-Wege-Schalter (18, 19) umfasst, der einen ersten Eingang hat, an dem ein Null-Drehmoment-Befehl (Ccn) angelegt wird, einen zweiten Eingang, an dem der Ausgang des ersten Zwei-Wege-Schalters (16, 17) angelegt wird, und einen Befehlseingang, an dem ein Null-Geschwindigkeits-Detektionssignal (Sdv) angelegt wird, das repräsentativ für ein Ergebnis der Detektion der Null-Geschwindigkeit des Luftfahrzeugs ist.

## Claims

1. Method for controlling a taxi system of an aircraft, said taxi system comprising at least one drive actuator arranged to rotate a wheel of the aircraft, said wheel being further equipped with a brake that is separate from the drive actuator, the controlling method comprising the steps of:

   generating a traction command (Com) to control an electric motor of the drive actuator so that the drive actuator applies a traction motor torque on the wheel, intended to move the aircraft on the ground;
   detecting whether an external braking command, intended to command a braking of the wheel via the brake, is generated;

   the method being **characterized in that** it further comprises the steps of :

   if an external braking command is generated, producing a predetermined minimum command (Cmp) to control the electric motor so that the drive actuator applies a predetermined minimum motor torque on the wheel during braking, which is strictly positive;
   detecting if a speed of the aircraft becomes zero and, if so, inhibiting the predetermined minimum command (Cmp) so that the drive actuator applies a zero torque on the wheel.

2. Controlling method according to claim 1, wherein the predetermined minimum motor torque is defined so as to ensure that during braking, the predetermined minimum command (Cmp) cannot produce a negative quadratic axis current (Iq).

3. Controlling method according to claim 2, wherein the predetermined minimum command is defined so that a minimum quadratic axis current Iqmin is such that:

$$\mathtt{Iqmin \; > \; Idmax.sin(\theta m),}$$

   where Idmax is a maximum defluxing current which can be applied and where $\theta_m$ is a maximum angular measurement error of an angular position sensor of the rotor of the electric motor, said angular position sensor being used to control the electric motor.

4. Controlling method according to one of the preceding claims, wherein the predetermined minimum motor torque is of between 400N.m and 600N.m.

5. Controlling method according to one of the preceding claims, wherein the external braking command is generated by a pilot of the aircraft using a brake pedal, and wherein the detection of the generation of the external braking command comprises the steps of acquiring an estimation of a press (Esl, Es2) on the brake pedal and of comparing the estimation of the press with at least one predetermined threshold (Sph, Spb) .

6. System for controlling an aircraft taxi system, the controlling system (1) being arranged to implement the controlling method according to one of the preceding claims, the controlling system comprising:

   a control/command module (5) arranged to generate the traction command (Com);
   a braking detection module (7) arranged to detect whether the external braking command is generated;
   an application module (8) arranged to generate the predetermined minimum command;
   a zero speed detection module (6) arranged to detect if the speed of the aircraft becomes zero;
   an inhibition module (9) arranged to inhibit the predetermined minimum command when the speed of the aircraft becomes zero.

7. Controlling system according to claim 6, wherein the braking detection module (7) comprises a hysteresis comparator (10, 11) comprising a first input to which an estimation of a press (Esl, Es2) on a brake pedal is applied, a second input on which a high predetermined threshold is applied, and a third input to which a low predetermined threshold is applied, the hysteresis comparator being arranged to perform a comparison of the estimation of the press with the high predetermined threshold and the low predetermined threshold.

8. Controlling system according to one of claims 6 or 7, wherein the application module (8) comprises a first two-way switch (16, 17) having a first input to which the predetermined minimum command (Cmp) is applied, a second input to which the traction command (Com) is applied, an output, and a command input to which a braking detection signal (Sdfl, Sdf2) is applied, representative of a result of the detection of the braking.

9. Controlling system according to claim 8, wherein the inhibition module (9) comprises a second two-way switch (18, 19) having a first input to which a zero torque command (Ccn) is applied, a second input to which the output of the first two-way switch (16, 17) is applied, and a command input to which a zero speed detection signal (Sdv) is applied, representative of a result of the zero speed detection of the aircraft.

Fig. 1

EP 4 103 469 B1

Fig. 2

Fig. 3

Axe q

P

Iq

Id

Axe d

# Fig. 4

Axe q réel

**Axe q théorique**

θ

**Axe d théorique**

P

Iq

Id

Axe d réel

# Fig. 5

**Fig. 6**

**RÉFÉRENCES CITÉES DANS LA DESCRIPTION**

**Documents brevets cités dans la description**

- EP 3453613 A1